# EUROPÄISCHE PATENTSCHRIFT

(11) **EP 3 359 925 B1**
(45) Veröffentlichungstag und Bekanntmachung des Hinweises auf die Patenterteilung: **11.11.2020**
(21) Anmeldenummer: 16788635.7
(22) Anmeldetag: 19.09.2016
(51) Int. Cl.: G01F 22/00, G01F 23/00, G01F 23/28, G01F 23/284, G01S 7/00, G01S 13/88, G01S 13/87, G01S 13/89

(54) **FÜLLSTANDMESSSYSTEM UND -VERFAHREN ZUR ERFASSUNG EINER TOPOLOGIE EINER FÜLLGUTOBERFLÄCHE**
SYSTEM AND METHOD FOR DETERMINING THE TOPOLOGY OF A BULK MATERIAL SURFACE
SYSTÈME ET PROCÉDÉ DE DÉTERMINATION DE LA TOPOLOGIE D'UN MATÉRIAU EN VRAC

(30) Priorität: 06.10.2015 DE 102015219276
(43) Veröffentlichungstag der Anmeldung: 15.08.2018
(73) Patentinhaber: VEGA Grieshaber KG, 77709 Wolfach (DE)
(72) Erfinder: KECH, Günter, 77709 Wolfach (DE)
(74) Vertreter: Maiwald Patent- und Rechtsanwaltsgesellschaft mbH
(86) Internationale Anmeldenummer: PCT/EP2016/072163
(87) Internationale Veröffentlichungsnummer: WO 2017/060064

(56) Entgegenhaltungen:
- EP-A1- 0 626 569
- EP-A1- 1 854 251
- EP-B1- 0 720 732
- DE-B3-102011 002 038
- GB-A- 2 190 501
- US-A- 5 163 323
- US-A1- 2009 088 987
- US-A1- 2009 322 593
- US-A1- 2012 281 096
- US-A1- 2014 150 549

## Beschreibung

### Gebiet der Erfindung

Die Erfindung betrifft die Füllstandmessung. Insbesondere betrifft die Erfindung ein Füllstandmesssystem zur Erfassung einer Topologie einer Füllgutoberfläche eines Füllgutes in einem Behälter, ein Verfahren zum Erfassen einer Topologie einer Füllgutoberfläche eines Füllgutes in einem Behälter, ein Programmelement und ein computerlesbares Medium.

### Hintergrund

Für die Bestimmung der Topologie einer Füllgutoberfläche, die auch als Oberflächenkontur bezeichnet wird, oder zur Bestimmung des Volumens eines Schüttguts kann ein Füllstandmessgerät eingesetzt werden, welches die Oberfläche des Füllgutes abtastet. Alternativ kann eine Anordnung aus mehreren Füllstandmessgeräten eingesetzt werden, aus deren Messdaten dann die Topologie der Füllgutoberfläche bzw. das Füllgutvolumen bestimmt werden kann. Diese umfassenden Messsysteme sind oft komplex und aufwändig.

Die US 2019/0088987 A1 beschreibt ein Messsystem mit mehreren Sensoren und einem zentral angeordneten, externen Steuergerät.

DE 10 2011 002 038 B3 beschreibt einen Füllstandsensor zur Bestimmung des Füllstands in einem Behälter mit einer Sensoreinheit zur Erzeugung einer von dem Füllstand abhängigen Messgröße und einer Auswertungseinheit, die ausgebildet ist, den Füllstand zu bestimmen. Der Füllstandsensor weist einen Kommunikationseingang zum Anschluss eines Vorgängers in einem Ringverbund mehrere Füllstandsensoren auf.

US 2009/0322503 A1 beschreibt ein Radarfüllstandsystem mit einer galvanisch isolierten Kommunikationsverbindung.

US 2014/0150549 A1 beschreibt ein Füllstandmesssystem für Flugzeuge, welches die von einem Schwimmer reflektierten Signale misst.

EP 0 720 732 B2 beschreibt eine Zweidruckmessung mit einem Doppeltransmitter mit einem Master-Druckmesser und einem Slave-Druckmesser.

US 2012/0281096 A1 beschreibt ein Lagertankinspektionssystem mit mehreren Sensoren unterschiedlicher Art.

US 5,163,323 A beschreibt ein Ultraschalldistanzmessgerät für Tankanwendungen.

### Zusammenfassung der Erfindung

Es ist eine Aufgabe der Erfindung, ein effizientes, flexibles und kostengünstiges Messsystem zur Erfassung einer Topologie einer Füllgutoberfläche eines Füllgutes in einem Behälter bereitzustellen.

Diese Aufgabe wird durch die Merkmale der unabhängigen Patentansprüche gelöst. Die Erfindung ist in den unabhängigen Patentansprüchen definiert. Weiterbildungen der Erfindung ergeben sich aus den Unteransprüchen und der folgenden Beschreibung.

Ein erster Aspekt der Erfindung betrifft ein Füllstandmesssystem zur Erfassung einer Topologie einer Füllgutoberfläche Füllgutes in einem Behälter, welches ein erstes und zumindest ein zweites Füllstandmessgerät aufweist. Bei dem ersten Füllstandmessgerät handelt es sich um ein als Master-Gerät ausgebildetes Füllstandmessgerät und bei dem oder den zweiten Füllstandmessgeräten um als Slave-Geräte ausgebildete Messgeräte, die jeweils in einem räumlichen Abstand vom Master-Gerät an das Master-Gerät anzuschließen sind. Das Master-Gerät ist hierbei zur Übermittlung von Steuersignalen an das oder die Slave-Geräte zur Steuerung des/der Slave-Geräte ausgeführt.

An dieser Stelle sei angemerkt, dass, wenn im Folgenden nur von einem Slave-Gerät die Rede ist, auch mehrere entsprechende Slave-Geräte vorgesehen sein können. Das Master-Gerät kann insbesondere ausgeführt sein, an eine große Anzahl an Slave-Geräten angeschlossen zu werden (seriell und/oder parallel) und insbesondere festzustellen (durch Kommunikation mit den entsprechenden Slave-Geräten), wie viele Slave-Geräte mit dem Master-Gerät verbunden sind.

Das Master-Gerät ist ausgeführt, Aufgaben wahrzunehmen, die das Slave-Gerät nicht selbstständig wahrnehmen kann. Bei diesen zusätzlichen Aufgaben kann es sich beispielsweise um die Koordination der gesamten Messtätigkeit des Systems und zumindest um Teile der sich daran anschließenden Auswertetätigkeit handeln. Das Master-Gerät ist insbesondere für die Steuerung des zeitlichen Ablaufs der Messtätigkeit des Systems zuständig. Auch kann vorgesehen sein, dass das Master-Gerät die Auswertung und Verwaltung der Messdaten der Slave-Geräte vollständig oder zumindest teilweise übernimmt.

Auch kann vorgesehen sein, dass das Master-Gerät eine Messung durch das entsprechende Slave-Gerät triggert.

Das Slave-Gerät ist somit abhängig vom Master-Gerät und ist kein sog. Stand-Alone-Gerät, welches auch ohne ein Master-Gerät zur Füllstandmessung verwendet werden kann. Somit ist es möglich, die Slave-Geräte kostengünstiger herzustellen, als dies bisher der Fall ist, da es sich um "abgespeckte" Messgeräte handelt, welche nicht in der Lage sind, Messaufgaben vollkommen selbstständig zu steuern und die empfangenen Echokurven vollständig auszuwerten. Unter der vollständigen Auswertung sind in diesem Zusammenhang insbesondere die Ermittlung der Topologie der Oberfläche und optional die Berechnung des unter den Sensoren befindlichen Schüttgutvolumens zu verstehen.

Es kann auch vorgesehen sein, dass das Master-Gerät und das Slave-Gerät durch entsprechende Softwarekonfiguration in ihrer jeweiligen Rolle definiert werden. In diesem Fall unterscheiden sich das Master-Gerät und das Slave-Gerät weder in Bezug auf ihre Hardware noch in Bezug auf ihre Gerätefirmware.

Bei dem Master-Gerät und auch bei den Slave-Geräten kann es sich um freistrahlende Füllstandradargeräte oder um Füllstandmessgeräte nach dem Prinzip der geführten Mikrowelle handeln. Grundsätzlich ist es aber auch möglich, dass es sich bei diesen Messgeräten um Ultraschallsensoren oder Lasersensoren handelt. Es kann auch vorgesehen sein, Einzelsensoren mit unterschiedlichen Messprinzipien innerhalb eines Messsystems zu kombinieren.

Das Füllstandmesssystem ist in der Lage, die Oberflächenkontur (Topologie) in einem Schüttgutbunker durch Verwendung mehrerer räumlich getrennter Füllstandmessgeräte zu bestimmen, wobei eines der Messgeräte als Master fungiert und die Steuerung und Auswertung der Signale aller anderen Messgeräte (Slaves) übernimmt.

Gemäß einer Ausführungsform der Erfindung ist das Master-Gerät an eine externe Energieversorgung angeschlossen, die beispielsweise in Form einer Zweileiterschleife ausgeführt ist. Das Master-Gerät ist hierbei zur Energieversorgung des Slave-Geräts ausgeführt. Beispielsweise kann vorgesehen sein, dass das Master-Gerät zur alleinigen Energieversorgung des Slave-Geräts ausgeführt ist, dass also die verschiedenen, im System eingebundenen Slave-Geräte keine eigene Energieversorgung aufweisen. Die vom Master-Gerät bereitgestellte Energie kann an die unterschiedlichen Slave-Geräte abgegeben werden und es kann vorgesehen sein, dass immer genau dann ein bestimmtes Slave-Gerät mit Energie vom Master-Gerät versorgt wird, wenn es diese auch benötigt. Auch kann vorgesehen sein, dass überschüssige Energie von einem Slave-Gerät zu einem anderen Slave-Gerät abgegeben wird, wenn das jeweils andere Slave-Gerät gerade einen entsprechenden Energiebedarf hat.

Die Slave-Geräte können Energiespeicher in Form von Speicherkondensatoren oder Batterien aufweisen, welche aufgeladen werden, bevor eine Füllstandmessung durch das entsprechende Slave-Gerät erfolgt.

Gemäß einer weiteren Ausführungsform der Erfindung sind die Steuersignale, die vom Master-Gerät an das Slave-Gerät übermittelt werden, zur Auslösung, also zum Triggern einer Messung durch das entsprechende Slave-Gerät ausgeführt. Die Slave-Geräte sind also nicht in der Lage, eigenständig zu entscheiden, ob eine Messung stattfinden muss oder nicht, sondern werden vor jeder Messung durch das Master-Gerät angewiesen, eine Messung durchzuführen.

Zusätzlich hierzu kann vorgesehen sein, dass, wenn das Master-Gerät das Slave-Gerät anweist, eine Messung durchzuführen, als nächstes dafür gesorgt wird, dass der Energiespeicher des Slave-Geräts auch voll genug ist, damit die Messung fehlerfrei durchgeführt werden kann. Erst wenn dies der Fall ist, wird die Messung tatsächlich ausgeführt. Diese Funktionalität kann vom Slave-Gerät übernommen werden.

Erfindungsgemäß ist das Slave-Gerät zur Erfassung einer Echokurve ausgeführt, aus welcher der Abstand zwischen dem Slave-Gerät und der Füllgutoberfläche bestimmbar ist. Weiter ist das Slave-Gerät zur Übermittlung entweder der vollständigen Echokurve, eines Teiles davon oder von daraus durch das Slave-Gerät abgeleiteten Daten an das Master-Gerät ausgeführt. Bei den aus der Echokurve abgeleiteten Daten kann es sich beispielsweise um die Positionen der aus der Echokurve ableitbaren Echos sowie deren Amplituden handeln. Hierdurch kann der Datentransfer zwischen Slave-Geräten und Master-Gerät reduziert werden.

Insbesondere kann vorgesehen sein, dass ein Slave-Gerät nur dann eine Echokurve oder die daraus abgeleiteten Daten an das Master-Gerät überträgt, wenn es festgestellt hat, dass sich der Füllstand (oder ein anderer interessierender Parameter der Echokurve, wie beispielsweise die Amplitude das Füllgutechos) um einen bestimmten Betrag verändert hat, beispielsweise um 2 cm (oder im Falle der Amplitude um 30% oder 50%). Somit kann vermieden werden, dass Echokurven oder andere Daten vom Slave-Gerät an das Master-Gerät geschickt werden, wenn dies nicht erforderlich ist, da sich der Füllstand ja gar nicht oder nur unbedeutend geändert hat. Auch hierdurch kann der Datentransfer zwischen Master- und Slave-Geräten verringert werden.

Erfindungsgemäß ist auch das Master-Gerät zur Erfassung einer Echokurve ausgeführt, aus welcher sich der Abstand zwischen dem Master-Gerät und der Füllgutoberfläche bestimmen lässt. Das Master-Gerät kann darüber hinaus die Topologie der Füllgutoberfläche des Füllgutes aus den von sämtlichen Slave-Geräten übermittelten Echokurven oder den von den Slave-Geräten daraus abgeleiteten Daten sowie aus der eigenen erfassten Echokurve berechnen.

Gemäß einer weiteren Ausführungsform der Erfindung weisen sowohl das Master-Gerät als auch das Slave-Gerät jeweils einen eigenen Positionssensor auf, aus dessen Messdaten sich die Positionen der Geräte bestimmen lassen. Hierbei ist das Slave-Gerät zur Übermittlung seiner aus den Messdaten des Positionssensors bestimmten Positionsdaten an das Master-Gerät ausgeführt.

Das Master-Gerät nimmt die von sämtlichen Slave-Geräten gesendeten Positionsdaten entgegen, welche dann bei der Berechnung der Topologie des Füllgutes berücksichtigt werden. Es ist somit nicht erforderlich, dass ein Benutzer die Position des entsprechenden Slave-Geräts händisch eingibt, da diese durch den Positionssensor, bei dem es sich beispielsweise um einen GPS-Empfänger handelt, bestimmt werden.

Gemäß einer weiteren Ausführungsform der Erfindung ist das Slave-Gerät zur automatischen Bestimmung und Übermittlung seiner Positionsdaten an das Master-Gerät ausgeführt, sobald es an das Master-Gerät angeschlossen ist und in Betrieb genommen wird. Hierdurch kann sichergestellt werden, dass das Master-Gerät die Positionen der Slave-Geräte kennt, wenn es deren Echokurven oder daraus abgeleitete Daten erhält.

Ein weiterer Aspekt der Erfindung betrifft ein Verfahren zum Erfassen einer Topologie einer Füllgutoberfläche eines Füllgutes in einem Behälter. Es werden Steuersignale von einem Master-Gerät an eine Vielzahl von Slave-Geräten zur Steuerung der Slave-Geräte übermittelt. Sowohl bei dem Master-Gerät als auch bei den Slave-Geräten handelt es sich um Füllstandmessgeräte, beispielsweise Füllstandradarsensoren.

Danach erfasst jedes Gerät, also sowohl das Master-Gerät als auch jedes der Slave-Geräte, jeweils eine Echokurve, aus welcher der entsprechende Abstand zwischen dem Slave-Gerät bzw. Master-Gerät und der Füllgutoberfläche bestimmt wird. Diese Bestimmung erfolgt entweder durch das entsprechende Slave-Gerät oder zentral im Master-Gerät.

Nach der Datenerfassung erfolgt eine Übermittlung der erfassten Echokurven oder der daraus durch das entsprechende Slave-Gerät abgeleiteten Daten an das Master-Gerät, woraufhin eine Berechnung der Topologie der Füllgutoberfläche des Füllgutes aus den von sämtlichen Slave-Geräten übermittelten Echokurven oder den von den Slave-Geräten daraus abgeleiteten Daten sowie aus der durch das Master-Gerät erfassten Echokurve erfolgt.

Ein weiterer Aspekt der Erfindung betrifft ein Programmelement, das, wenn es auf den Prozessoren eines Füllstandmesssystems, wie es oben und im Folgenden beschrieben ist, ausgeführt wird, das Füllstandmesssystem anleitet, die oben und im Folgenden beschriebenen Verfahrensschritte durchzuführen.

Ein letzter Aspekt der Erfindung betrifft ein computerlesbares Medium, auf dem das oben beschriebene Programmelement gespeichert ist.

Dabei kann das Programmelement zum Beispiel Teil einer Software sein, die auf einem Prozessor des Füllstandmesssystems gespeichert ist. Weiterhin kann das Programmelement schon von Anfang an die Erfindung verwenden, oder ein Programmelement sein, welches durch eine Aktualisierung (Update) ein bestehendes Programmelement zur Verwendung der Erfindung veranlasst.

Im Folgenden werden mit Verweis auf die Figuren Ausführungsbeispiele der Erfindung beschrieben.

Kurze Beschreibung der Figuren
Fig. 1 zeigt ein Füllstandmesssystem gemäß einem Ausführungsbeispiel.
Fig. 2 zeigt ein Flussdiagramm eines Verfahrens gemäß einem Ausführungsbeispiel.

### Detaillierte Beschreibung von Ausführungsbeispielen

Die Darstellungen in den Figuren sind schematisch und nicht maßstäblich.

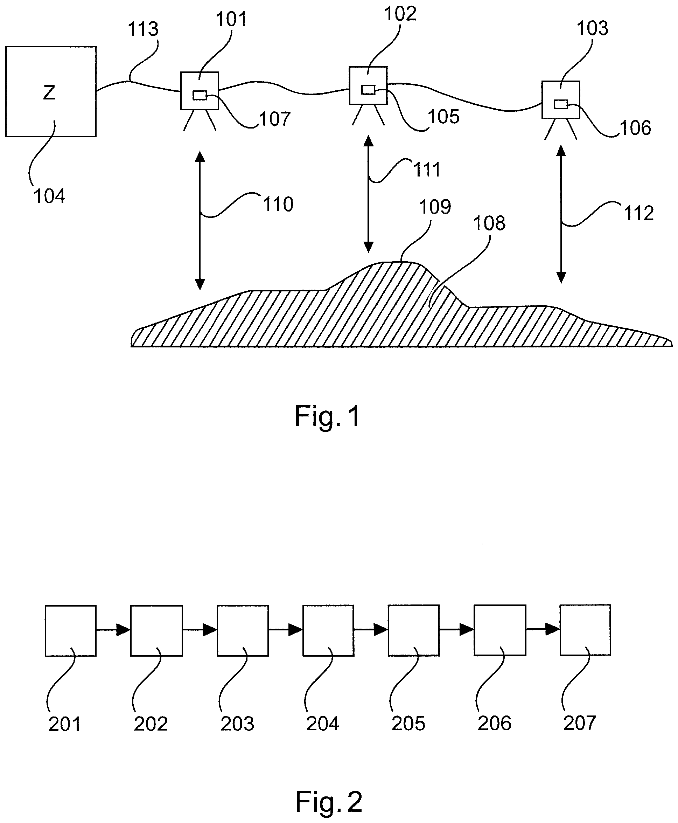

Fig. 1 zeigt ein Füllstandmesssystem gemäß einem Ausführungsbeispiel. Das Füllstandmesssystem weist ein als Master-Gerät ausgebildetes Füllstandmessgerät 101 auf. Hierbei handelt es sich beispielsweise um ein Füllstandradar zur berührungslosen Messung. Das Master-Gerät ist über eine Leitung 113 mit einer externen Energiequelle 104 verbunden. Die Leitung 113 dient insbesondere der Energieversorgung des Master-Geräts. Es kann jedoch vorgesehen sein, dass über diese Leitung auch Daten zwischen der Einrichtung 104 und dem Gerät übertragen werden. In diesem Fall kann es sich bei der Einrichtung 104 um eine zentrale Leistelle oder dgl. handeln und die Leitung 113 kann beispielsweise als Zweidrahtleitung oder Vierdrahtleitung ausgeführt sein. Es ist aber auch möglich, dass das Master-Gerät 101 drahtgebunden mit Energie versorgt wird und die Datenübertragung zwischen dem Master-Gerät und einer Leistelle kabellos erfolgt.

An das Master-Gerät 101 kann eine Vielzahl an Slave-Geräten 102, 103 angeschlossen werden, beispielsweise seriell.

Jedes der Geräte 101, 102, 103 kann einen eigenen Positionssensor 107, 105, 106, beispielsweise in Form eines GPS-Empfängers aufweisen, mit dessen Hilfe sich die genaue Position des Geräts feststellen lässt. Zur Topologie und Volumenbestimmung des Füllgutes 108 ist insbesondere die relative Lage der unterschiedlichen Geräte zueinander wichtig. Diese relative Lage kann vom Master-Gerät 101 aus Kenntnis der Positionsdaten der einzelnen Geräte berechnet werden.

Jedes der Geräte weist eine Antenne auf, welche ein Messsignal 110, 111, 112 in Richtung Füllgutoberfläche 109 aussendet. Das dort reflektierte Messsignal wird dann von der entsprechenden Antenne empfangen und kann dann ausgewertet werden.

Das in Fig. 1 dargestellte Messsystem kann modular erweiterbar ausgeführt sein. In anderen Worten kann vorgesehen sein, dass eine vom Kunden im Wesentlichen frei wählbare Anzahl an Slave-Geräten an das Master-Gerät angeschlossen wird. Der Master erkennt hierbei die Anzahl an angeschlossenen Slave-Geräten und, über die von den Slave-Geräten übermittelten Daten, auch deren Positionen. Aus den von den Slave-Geräten übermittelten Daten bestimmt das Master-Gerät dann, nachdem es seine eigene Messung durchgeführt hat, die Topologie der Schüttgutoberfläche 109.

Somit wird ein für den Kunden flexibel nutzbares Füllstandmesssystem zur exakten Vermessung der Oberflächenkontur des Schüttguts bereitgestellt. Das als Master-Gerät ausgebildete Füllstandmessgerät 101 übernimmt eine Master-Funktion und koordiniert die Erfassung von Messdaten der räumlich abgesetzten Slave-Geräte 102, 103.

Die verschiedenen Slave-Geräte 102, 103 weisen im Vergleich zu herkömmlichen Füllstandmessgeräten reduzierte Hard- und Softwarefunktionalitäten auf und können somit zu geringeren Kosten hergestellt werden. Sie können jedoch nicht als Stand-Alone-Devices betrieben werden.

Durch die Verschaltung der Geräte miteinander wird ein Signal-, Daten- und Energieaustausch zwischen dem Master-Gerät und den Slave-Geräten ermöglicht. Das Gesamtsystem ist in der Lage, Kennwerte einer Schüttgutoberfläche und eines Volumens eines unter dem Messgerät befindlichen Mediums 108 zu ermitteln. Diese Ermittlung wird letztendlich vom Master-Gerät 101 koordiniert und die Messdatenauswertung von diesem vollständig oder zumindest teilweise durchgeführt. Eine Messdatenvorverarbeitung kann bereits innerhalb des entsprechenden Slave-Geräts erfolgen, wenn das Slave-Gerät entsprechend eingerichtet ist. Im Regelfall wird es aber so sein, dass das Master-Gerät 101 möglichst viele Aufgaben selber übernimmt, sodass die Slave-Geräte 102, 103 möglichst preiswert hergestellt sein können.

Insbesondere kann eine Schnittstelle 113 vorgesehen sein, über welche die ermittelten Kennwerte nach außen hin, beispielsweise zu einer zentralen Leistelle 104, übermittelt werden können, wobei diese Schnittstelle die Realisierung der Messung durch mehrere Sensoren "versteckt". Dies bedeutet, dass es für die externe Einheit 104 grundsätzlich keinen Unterschied machen wird, ob das oben beschriebene Füllstandmesssystem mit ihr verbunden ist oder ein herkömmliches, zur Topologieerfassung ausgeführtes Messsystem.

So wird demnach eine skalierbare Messeinrichtung auf Basis von mehreren Füllstandmessgeräten zur Erfassung zumindest eines Kennwertes einer Oberfläche bereitgestellt, wobei zumindest ein Master-Gerät mit zumindest einem Slave-Gerät interagiert, um Signale, Steuerbefehle, Daten und/oder Energie auszutauschen, und unter Verwendung von Daten des zumindest einen Slave-Geräts einen Kennwert an einer externen Schnittstelle bereitzustellen.

Das Füllstandmesssystem besteht beispielsweise aus genau einem Master-Gerät und zumindest einem Slave-Gerät, wobei das Master-Gerät und das Slave-Gerät einen räumlichen Abstand zueinander aufweisen, der größer ist als die Wellenlänge des zur Füllstandmessung verwendeten Radar- oder Ultraschallsignals. Die Füllstandmessgeräte sind über dem Füllgut montiert.

Das Master-Gerät übermittelt zunächst Energie und/oder Steuersignale an den zumindest einen Slave, woraufhin dieser mithilfe eines Radarsignals (oder Ultraschallsignals) den Abstand zum unter ihm liegenden Füllgut bestimmt. Der Slave kann beispielsweise eingerichtet sein, vor der eigentlichen Messung zunächst Energie zu sammeln, die er vom Master übermittelt bekommt, beispielsweise über eine Zweileiterschnittstelle.

Der Slave bestimmt während der eigentlichen Messung zumindest eine Echokurve, welche er in analoger, digitaler oder auch digital-komprimierter Form an den Master übermittelt. Es kann auch vorgesehen sein, dass der Slave nur einen Kennwert der Echokurve, beispielsweise die Position des Füllgutechos und ggf. dessen Amplitude, an den Master übermittelt.

Der Master kann eingerichtet sein, eine Vielzahl von Slave-Geräten mit Energie- und/oder Steuersignalen parallel oder zeitlich nacheinander anzusteuern, diese in einen Messmodus zu überführen und die Ergebnisse der Messungen von diesen zu empfangen.

Der Master bestimmt aus der Vielzahl empfangener Einzelmessergebnisse anschließend Kennwerte, welche die Form der Schüttgutoberfläche und des unter den Sensoren befindlichen Volumens betreffen. Anschließend stellt der Master die Ergebnisse in einer für den Kunden zentralen Schnittstelle nach außen hin bereit, beispielsweise über HART, Ethernet, ein Bediendisplay, WLAN, Bluetooth, Smartphone-App, etc.

Es kann vorgesehen sein, dass der Master selbst als Zweileitersensor ausgeführt ist und alle Slave-Geräte ebenfalls mit Energie versorgt. Es kann aber auch vorgesehen sein, dass die Slave-Geräte eigenständig ihre Energie beziehen, beispielsweise über eine eigenständige Drahtverbindung.

Die Kommunikation zwischen Master und Slaves kann zeitgesteuert oder eventgetrieben stattfinden. Beispielsweise kann in letzterem Fall vorgesehen sein, dass der Slave nur dann neue Daten an den Master schickt, wenn sich der Füllstand um einen bestimmten Betrag seit der letzten Messung verändert hat, beispielsweise um 2 cm. Als Kommunikationsmittel kommen sowohl drahtgebundene analoge und/oder digitale Mittel als auch drahtlose Verbindungsmittel in Frage.

Fig. 2 zeigt ein Flussdiagramm eines Verfahrens gemäß einem Ausführungsbeispiel. In Schritt 201 erfolgt das Anschließen mehrerer Slave-Geräte an ein Master-Gerät sowie deren Inbetriebnahme. In Schritt 202 messen die Slave-Geräte deren aktuelle Position und übermitteln die entsprechenden Positionsdaten an das Master-Gerät, welches daraus die relativen Positionen der unterschiedlichen Geräte zueinander berechnet. In Schritt 203 übermittelt das Master-Gerät Steuersignale an die Slave-Geräte, um diese zu steuern und die verschiedenen Füllstandmessungen zu triggern. In Schritt 204 erfassen sowohl das Master-Gerät als auch die unterschiedlichen Slave-Geräte jeweils eine Echokurve, aus welcher der Abstand zwischen dem Master-Gerät bzw. dem entsprechenden Slave-Gerät und der Füllgutoberfläche bestimmbar ist. Die von den Slave-Geräten ermittelten Echokurven werden in Schritt 205 an das Master-Gerät übermittelt. Alternativ hierzu kann vorgesehen sein, dass jedes Slave-Gerät eine Vorverarbeitung der empfangenen Echokurve durchführt und nur entsprechende vorverarbeitete Daten an das Master-Gerät übermittelt. Insbesondere kann vorgesehen sein, dass diese Datenübermittlung nur dann stattfindet, wenn sich die Daten im Vergleich zu einer vorherigen Messung hinreichend stark geändert haben. Hierdurch kann der Datentransfer reduziert werden.

In Schritt 206 wird schließlich die Topologie der Füllgutoberfläche und optional das Volumen des Füllgutes aus den von den Slave-Geräten an das Master-Gerät übermittelten Echokurven oder daraus abgeleiteten Daten sowie aus der durch das Master-Gerät erfassten Echokurve berechnet. Diese Berechnung erfolgt durch das Master-Gerät.

In Schritt 207 wird das Endergebnis an eine Zentrale übermittelt.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmesssystem, das zur Erfassung einer Topologie einer Füllgutoberfläche eingerichtet ist, aufweisend:
ein erstes Füllstandmessgerät (101), welches als Master-Gerät ausgeführt ist;
ein zweites Füllstandmessgerät (102, 103), welches als Slave-Gerät ausgeführt ist und in einem räumlichen Abstand vom Master-Gerät an das Master-Gerät anzuschließen ist, wobei das Slave-Gerät (102, 103) zur Erfassung einer Echokurve ausgeführt ist, aus welcher der Abstand zwischen dem Slave-Gerät und der Füllgutoberfläche bestimmbar ist; und
wobei das Slave-Gerät zur Übermittlung der Echokurve oder von daraus durch das Slave-Gerät abgeleiteten Daten an das Master-Gerät (101) ausgeführt ist;
wobei das Master-Gerät zur Übermittlung von Steuersignalen an das Slave-Gerät zur Steuerung des Slave-Geräts ausgeführt ist;
wobei das Master-Gerät (101) zur Erfassung einer Echokurve ausgeführt ist, aus welcher der Abstand zwischen dem Master-Gerät und der Füllgutoberfläche bestimmbar ist;
wobei das Master-Gerät zur Berechnung der Topologie der Füllgutoberfläche des Füllgutes aus den von sämtlichen Slave-Geräten (102, 103) an das Master-Gerät übermittelten Echokurven, oder den von sämtlichen Slave-Geräten daraus abgeleiteten und daraufhin an das Master-Gerät übermittelten Daten, sowie aus der eigenen erfassten Echokurve ausgeführt ist.

2. Füllstandmesssystem nach Anspruch 1,
wobei das Master-Gerät (101) an eine externe Energieversorgung (104) angeschlossen ist, beispielsweise in Form einer Zweileiterschleife; und
wobei das Master-Gerät zur Energieversorgung des Slave-Geräts (102, 103) ausgeführt ist.

3. Füllstandmesssystem nach Anspruch 2,
wobei das Master-Gerät (101) zur alleinigen Energieversorgung des Slave-Geräts (102, 103) ausgeführt ist.

4. Füllstandmesssystem nach einem der vorhergehenden Ansprüche,
wobei zumindest eines der Steuersignale zur Auslösung einer Messung durch das Slave-Gerät (102, 103) ausgeführt ist.

5. Füllstandmesssystem nach Anspruch 4,
wobei das Slave-Gerät (102, 103) nicht ausgeführt ist, eigenständig zu entscheiden, wann eine Messung auszuführen ist, sondern für die Auslösung einer Messung das entsprechende Steuersignal vom Master-Gerät (101) benötigt.

6. Füllstandmesssystem nach Anspruch 1,
wobei das Slave-Gerät (102, 103) ausgeführt ist, nur dann eine Echokurve oder daraus abgeleitete Daten an das Master-Gerät (101) zu übertragen, wenn es festgestellt hat, dass sich der Füllstand um mehr als einen vorbestimmten Schwellwert geändert hat.

7. Füllstandmesssystem nach einem der vorhergehenden Ansprüche,
wobei das Master-Gerät (101) und das Slave-Gerät (102, 103) jeweils einen Positionssensor (107, 105, 106) aufweisen, aus deren Daten sich die Positionen der Geräte bestimmen lassen; und
wobei das Slave-Gerät zur Übermittlung seiner Positionsdaten an das Master-Gerät ausgeführt ist.

8. Füllstandmesssystem nach Anspruch 7,
wobei das Master-Gerät (101) zur Entgegennahme der von sämtlichen Slave-Geräten (102, 103) übermittelten Positionsdaten und zur Berücksichtigung dieser Positionsdaten bei der Berechnung der Topologie der Füllgutoberfläche des Füllgutes ausgeführt ist.

9. Füllstandmesssystem nach Anspruch 1 oder 7,
wobei das Slave-Gerät (102, 103) zur automatischen Bestimmung und Übermittlung seiner Positionsdaten an das Master-Gerät (101) ausgeführt ist, sobald es an das Master-Gerät angeschlossen und in Betrieb genommen wird.

10. Füllstandmesssystem nach einem der vorhergehenden Ansprüche,
wobei die Füllstandmessgeräte (101, 102, 103) als Radargeräte ausgebildet sind.

11. Füllstandmesssystem nach einem der vorhergehenden Ansprüche,
wobei das Master-Gerät (101) zur Steuerung des gesamten Füllstandmesssystems ausgeführt ist.

12. Verfahren zum Erfassen einer Topologie einer Füllgutoberfläche, aufweisend:
Übermitteln von Steuersignalen an eine Vielzahl von Slave-Geräten (102, 103) durch ein Master-Gerät (101) zur Steuerung der Slave-Geräte;
Erfassen jeweils einer Echokurve durch das Master-Gerät (101) und jedes der Slave-Geräte (102, 103), aus welcher der Abstand zwischen dem Master-Gerät bzw. dem entsprechenden Slave-Gerät und der Füllgutoberfläche bestimmbar ist, wobei das Slave-Gerät (102, 103) in einem räumlichen Abstand vom Master-Gerät an das Master-Gerät anzuschließen ist;
Übermitteln der Echokurven oder von daraus durch das entsprechende Slave-Gerät abgeleiteten Daten an das Master-Gerät;
Berechnen der Topologie der Füllgutoberfläche des Füllgutes aus den von sämtlichen Slave-Geräten (102, 103) übermittelten Echokurven oder den von den Slave-Geräten daraus abgeleiteten Daten sowie aus der durch das Master-Gerät erfassten Echokurve.

13. Programmelement, das, wenn es auf den Prozessoren eines Füllstandmesssystems ausgeführt wird, das Füllstandmesssystem anleitet, die Schritte des Verfahrens gemäß Anspruch 12 durchzuführen.

14. Computerlesbares Medium, auf dem ein Programmelement nach Anspruch 13 gespeichert ist.

15. Verwendung eines Füllstandmesssystems nach einem der Ansprüche 1 bis 11 zur Erfassung einer Topologie einer Füllgutoberfläche.

## Claims

1. A fill level measuring system configured for capturing a topology of a filling material surface, comprising:
a first fill level measuring device (101) which is designed as a master device;
a second fill level measuring device (102, 103) which is designed as a slave device and is to be connected to the master device at a spatial distance from the master device, wherein the slave device (102, 103) is designed for capturing an echo curve, from which the distance between the slave device and the filling material surface is determinable; and
wherein the slave device is designed for transmitting the echo curve or data derived therefrom by the slave device to the master device (101);
wherein the master device is designed for transmitting control signals to the slave device for controlling the slave device;
wherein the master device (101) is designed for capturing an echo curve from which the distance between the master device and the filling material surface can be determined;
wherein the master device is designed for calculating the topology of the filling material surface from the echo curves transmitted from all slave devices (102, 103) to the master device, or the data derived therefrom by all slave devices and subsequently transmitted to the master device, as well as from its own captured echo curve.

2. The fill level measuring system according to claim 1,
wherein the master device (101) is connected to an external power supply (104), for example in the form of a two-wire loop; and
wherein the master device is designed to supply power to the slave device (102, 103).

3. The fill level measuring system according to claim 2,
wherein the master device (101) is configured to solely supply power to the slave device (102, 103).

4. The fill level measuring system according to any one of the preceding claims,
wherein at least one of the control signals is configured to trigger a measurement by the slave device (102, 103).

5. The fill level measuring system according to claim 4,
whereby the slave device (102, 103) is not designed to decide independently when a measurement is to be carried out, but requires a corresponding control signal from the master device (101) to trigger a measurement.

6. The fill level measuring system according to claim 1,
wherein the slave device (102, 103) is configured to transmit an echo curve or data derived therefrom to the master device (101) only when it has detected that the level has changed by more than a predetermined threshold.

7. The fill level measuring system according to any of the preceding claims,
wherein the master device (101) and the slave device (102, 103) each have a position sensor (107, 105, 106) from whose data the positions of the devices can be determined; and
wherein the slave device is designed to transmit its position data to the master device.

8. The fill level measuring system according to claim 7,
wherein the master device (101) is designed to receive the position data transmitted by all slave devices (102, 103) and to take these position data into account when calculating the topology of the filling material surface of the filling material.

9. The fill level measuring system according to claim 1 or 7,
wherein the slave device (102, 103) is designed to automatically determine and transmit its position data to the master device (101) when it is connected to the master device and put into operation.

10. The fill level measuring system according to any one of the preceding claims,
wherein the fill level measuring devices (101, 102, 103) are designed as radar devices.

11. The fill level measuring system according to any one of the preceding claims,
wherein the master device (101) is designed to control the entire fill level measuring system.

12. A method for detecting a topology of a filling material surface, comprising:
transmitting control signals to a plurality of slave devices (102, 103) by a master device (101) for controlling the slave devices;
detecting each one of an echo curve by the master device (101) and each one of the slave devices (102, 103), from which curve the distance between the master device or the corresponding slave device and the filling material surface can be determined, wherein the slave device (102, 103) is to be connected to the master device at a spatial distance from the master device;
transmitting the echo curves or data derived therefrom by the corresponding slave device to the master device;
calculating the topology of the filling material surface of the filling material from the echo curves transmitted by all the slave devices (102, 103) or from the data derived therefrom by the slave devices, and from the echo curve detected by the master device.

13. A program element which, when executed on the processors of a fill level measuring system, directs the fill level measuring system to perform the steps of the procedure according to claim 12.

14. A computer-readable medium on which a program element according to claim 13 is stored.

15. Using a fill level measuring system according to any one of Claims 1 through 11 for capturing a topology of a filling material surface.

## Revendications

1. Système de mesure de niveau de remplissage, qui est adapté à détecter une topologie de la surface d'un produit de remplissage, présentant :
un premier appareil de mesure de niveau de remplissage (101), qui est conçu comme un appareil maître ;
un deuxième appareil de mesure de niveau de remplissage (102, 103), qui est conçu comme un appareil esclave et qui doit être connecté à l'appareil maître à une distance spatiale de l'appareil maître, l'appareil esclave (102, 103) étant conçu pour détecter une courbe d'écho à partir de laquelle la distance entre l'appareil esclave et la surface du produit de remplissage peut être déterminée ; et
dans lequel l'appareil esclave est conçu pour transmettre la courbe d'écho ou des données qui en sont dérivées par l'appareil esclave à l'appareil maître (101) ;
dans lequel l'appareil maître est conçu pour transmettre des signaux de commande à l'appareil esclave pour commander l'appareil esclave ;
dans lequel l'appareil maître (101) est conçu pour détecter une courbe d'écho à partir de laquelle la distance entre l'appareil maître et la surface du produit de remplissage peut être déterminée ;
dans lequel l'appareil maître est conçu pour calculer la topologie de la surface du produit de remplissage à partir des courbes d'écho transmises par tous les appareils esclaves (102, 103) à l'appareil maître, ou des données qui en sont dérivées par tous les appareils esclaves, et transmises ensuite à l'appareil maître, ainsi que de sa propre courbe d'écho détectée.

2. Système de mesure de niveau de remplissage selon la revendication 1,
dans lequel l'appareil maître (101) est connecté à une alimentation en énergie externe (104), par exemple sous la forme d'une boucle à deux fils ; et
dans lequel l'appareil maître est conçu pour alimenter en énergie l'appareil esclave (102, 103).

3. Système de mesure de niveau de remplissage selon la revendication 2,
dans lequel l'appareil maître (101) est conçu pour être la seule alimentation en énergie de l'appareil esclave (102, 103) .

4. Système de mesure de niveau de remplissage selon l'une des revendications précédentes,
dans lequel au moins un des signaux de commande est conçu pour déclencher une mesure par l'appareil esclave (102, 103).

5. Système de mesure de niveau de remplissage selon la revendication 4,
dans lequel l'appareil esclave (102, 103) n'est pas conçu pour décider indépendamment du moment où une mesure doit être effectuée, mais nécessite le signal de commande correspondant de l'appareil maître (101) pour déclencher une mesure.

6. Système de mesure de niveau de remplissage selon la revendication 1,
dans lequel l'appareil esclave (102, 103) est conçu pour transmettre une courbe d'écho ou des données qui en sont dérivées à l'appareil maître (101) uniquement lorsqu'il a constaté que le niveau de remplissage a changé de plus d'un seuil prédéterminé.

7. Système de mesure de niveau de remplissage selon l'une des revendications précédentes,
dans lequel l'appareil maître (101) et l'appareil esclave (102, 103) présentent chacun un capteur de position (107, 105, 106) à partir des données duquel les positions des appareils peuvent être déterminées ; et
dans lequel l'appareil esclave est conçu pour transmettre ses données de position à l'appareil maître.

8. Système de mesure de niveau de remplissage selon la revendication 7,
dans lequel l'appareil maître (101) est conçu pour recevoir les données de position transmises par tous les appareils esclaves (102, 103) et pour tenir compte de ces données de position dans le calcul de la topologie de la surface du produit de remplissage.

9. Système de mesure de niveau de remplissage selon la revendication 1 ou 7,
dans lequel l'appareil esclave (102, 103) est conçu pour déterminer et transmettre automatiquement ses données de position à l'appareil maître (101) dès qu'il est connecté à l'appareil maître et mis en service.

10. Système de mesure de niveau de remplissage selon l'une des revendications précédentes,
dans lequel les appareils de mesure de niveau de remplissage (101, 102, 103) sont réalisés sous la forme d'appareils radar.

11. Système de mesure de niveau de remplissage selon l'une des revendications précédentes,
dans lequel l'appareil maître (101) est conçu pour commander l'ensemble du système de mesure de niveau de remplissage.

12. Procédé de détection d'une topologie de la surface d'un produit de remplissage, comprenant les étapes consistant à :
transmettre des signaux de commande à une pluralité d'appareils esclaves (102, 103) par un appareil maître (101) pour commander les appareils esclaves ;
détecter une courbe d'écho respective par l'appareil maître (101) et chacun des appareils esclaves (102, 103), à partir de laquelle la distance entre l'appareil maître ou l'appareil esclave correspondant et la surface du produit de remplissage peut être déterminée, l'appareil esclave (102, 103) devant être connecté à l'appareil maître à une distance spatiale de l'appareil maître ;
transmettre les courbes d'écho ou des données qui en sont dérivées par l'appareil esclave correspondant à l'appareil maître ;
calculer la topologie de la surface du produit de remplissage à partir des courbes d'écho transmises par tous les appareils esclaves (102, 103) ou des données qui en sont dérivées par les appareils esclaves ainsi que de la courbe d'écho détectée par l'appareil maître.

13. Élément de programme qui, lorsqu'il est exécuté sur les processeurs d'un système de mesure de niveau de remplissage, ordonne au système de mesure de niveau de remplissage d'exécuter les étapes du procédé selon la revendication 12.

14. Support lisible par ordinateur sur lequel est stocké un élément de programme selon la revendication 13.

15. Utilisation d'un système de mesure de niveau de remplissage selon l'une des revendications 1 à 11 pour détecter une topologie de la surface d'un produit de remplissage.
